# EUROPÄISCHE PATENTSCHRIFT

(11) **EP 3 242 543 B1**
(45) Veröffentlichungstag und Bekanntmachung des Hinweises auf die Patenterteilung: **13.03.2019**
(21) Anmeldenummer: 16705719.9
(22) Anmeldetag: 06.01.2016
(51) Int. Cl.: A01B 49/02, A01B 63/02

(54) **LANDWIRTSCHAFTLICHES ARBEITSGERÄT MIT ZUSATZFAHRWERK**
AGRICULTURAL IMPLEMENT HAVING AN AUXILIARY CHASSIS
ENGIN AGRICOLE À CHÂSSIS DE ROULEMENT SUPPLÉMENTAIRE

(30) Priorität: 09.01.2015 DE 102015100273
(43) Veröffentlichungstag der Anmeldung: 15.11.2017
(73) Patentinhaber: LEMKEN GmbH & Co. KG, 46519 Alpen (DE)
(72) Erfinder: PAULESSEN, Georg, 47877 Willich (DE); ACHTEN, Georg, 47918 Tönisvorst (DE)
(86) Internationale Anmeldenummer: PCT/DE2016/100003
(87) Internationale Veröffentlichungsnummer: WO 2016/110290

(56) Entgegenhaltungen:
- WO-A1-2013/036191
- DE-A1-102012 016 348
- DE-A1-102013 007 038

## Beschreibung

Die Erfindung betrifft ein landwirtschaftliches Arbeitsgerät gemäß dem Oberbegriff des Patentanspruches 1.
Aus der deutschen Offenlegungsschrift DE 10 2012 016 348 A1 ist ein Bodenbearbeitungsgerät mit hydraulisch betätigtem Stützrad bekannt. Um den ziehenden Schlepper von einem Teil des Gerätegewichtes in ausgehobenem Zustand zu entlasten, kann das Stützrad hydraulisch auf den Boden gedrückt werden und trägt somit einen Teil des Gerätegewichtes. Hierdurch wird die Lenkbarkeit des ziehenden Schleppers verbessert. Damit das Stützrad während der Arbeit keine Fahrspuren im Boden hinterlässt, kann dieses ebenso hydraulisch über die Bodenoberfläche ausgehoben werden. Allerdings ist beim Aushebevorgang des Gerätes das hydraulische Stützrad über ein Steuerventil separat zu betätigen.
Die deutsche Patentanmeldung DE 10 2013 007 038 A1 bedient sich einer mechanischen Lösung, wobei ein Gewichtsanteil einer schweren Packerwalze über ein Viergelenk auf ein Stützrad übertragen wird. In abgesenktem Zustand wird der Stützradarm über das Gerätegewicht nach oben gedrückt, das Stützrad hinterlässt ebenfalls keine Fahrspuren im bearbeiteten Boden. Allerdings variiert die Wirksamkeit des Stützrades zur Schleppervorderachsentlastung mit unterschiedlichen Walzengewichten. Der vordere Geräteteil muss zudem vom ziehenden Fahrzeug getragen werden. Ein weiteres landwirtschaftliches Arbeitsgerät ist aus der WO2013/036191 A1 bekannt.
Aufgabe der vorliegenden Erfindung ist es, das ziehende Fahrzeug um einen Teil des Gerätegewichtes zu entlasten, ohne dabei weitere zusätzliche Hydraulikeinrichtungen zu betätigen sowie eine fahrspurfreie Bodenoberfläche hinter dem Gerät in Arbeitsposition zu hinterlassen.
Diese Aufgabe wird durch die Merkmale des kennzeichnenden Teiles des Anspruches 1 gelöst.
Durch die vertikal bewegliche Anordnung zumindest eines Stützrades am Bodenbearbeitungsgerät in Verbindung mit einem Energiespeicher, welcher sich über eine Totpunktlage hinweg in zwei unterschiedliche Positionen bewegen kann, wird ein Mechanismus geschaffen, welcher in einer abgesenkten Geräteposition, welche vorzugsweise der Arbeitsstellung entspricht, durch Aufsetzen des Stützrades auf den Boden den Energiespeicher mit Stützenergie beaufschlagt und über seine Totpunktlage verschiebt, so dass der Energiespeicher nach Durchfahren dieser Lage das Stützrad mit seiner gespeicherten Energie über den Boden aushebt. Wird das Bodenbearbeitungsgerät durch das ziehende Fahrzeug ausgehoben, durchschreitet der Energiespeicher durch geschickte Gelenkanordnung seine Totpunktlage in entgegengesetzter Richtung und beaufschlagt das Stützrad in ausgehobener Geräteposition mit einer Stützkraft gegen die Bodenoberfläche. Da sich der Energiespeicher ebenfalls gegen den Rahmen des Bodenbearbeitungsgerätes abstützt, wird ein Teil des Gerätegewichtes durch das Stützrad getragen. Der Hubkraftbedarf des ziehenden Fahrzeuges wird verringert, seine Lenkfähigkeit dadurch verbessert.
Durch Anordnung der Wirklinie einer oder mehrerer Energiespeicher auf einer gedachten Geraden oder Ebene, welche durch die Widerlager bzw. ihre Lagerpunkte oder Lagerachsen verläuft, wird eine optimale Energieausnutzung erreicht. Dabei können mehrere Energiespeicher parallel oder in Reihe geschaltet werden. Auch eine mehrfache Widerlageranordnung mit jeweils zugeordneten Energiespeichern ist denkbar, beispielsweise rechts und links oder ober- und unterhalb des Radarms.
Durch Verbinden des Radarms mit dem Rahmen des Bodenbearbeitungsgerätes einerseits sowie mit dem Energiespeicher und einem oder mehreren Umlenkmechanismen andererseits, erreicht man eine aufgelöste Bauweise, wodurch der Energiespeicher in günstigere Bauräume verlegt werden kann, damit er beispielsweise Bodenbearbeitungswerkzeuge in ihrer Wirkung nicht beeinträchtigt. Durch den Umlenkmechanismus ergibt sich zudem eine weitere Möglichkeit, Übersetzungsverhältnisse und andere kinematische Abhängigkeiten zwischen Rahmen, Energiespeicher sowie beweglichem Radarm darzustellen.
Durch Verwenden eines Energiespeichers mit einstellbarer Vorspannung kann auf unterschiedliche Gerätegewichte oder Ausstattungsvarianten reagiert werden.

Dabei können Energiespeicher mit progressiver, linearer oder degressiver Kennlinie verwendet werden.
Der Energiespeicher kann sowohl ein- als auch mehrteilig ausgeführt sein, um verschiedene Kennlinien zu hinterlegen. Auch eine Kombination unterschiedlicher Federtypen, wie zuvor genannt, ist in gemeinsamer, kombinierter als auch räumlich voneinander getrennter Bauweise denkbar.
Neben klassischen Federn sind auch Elastomer-Federn, Kolben-Zylinder-Federn oder Balgfedern mit optional gekoppeltem Druck- oder Energiespeicher eingeschlossen. Bildet man den Energiespeicher als Fluidzylinder mit daran angeschlossenem Druckspeicher aus, ist ebenso eine aufgelöste und zudem kompakte Bauweise ermöglicht. Kombiniert man dieses System mit einer Druckversorgung nebst erforderlichen Ventilen, ist eine bequeme und variable Einstellung der Stütz und Aushubkräfte gegeben.
Über eine weitere Hilfsvorrichtung, welche durch eine externe Kraft beaufschlagt wird, kann die Verlagerung von zumindest einem Widerlager, wie sie beispielsweise beim Durchfahren der Totpunktlage auftritt, unterstützt oder überhaupt erst ausgelöst werden. Beispielsweise kann diese Hilfsvorrichtung durch Aushub des Gerätes oder durch Absenken einer Stützwalze betätigt werden und somit positionsabhängig den Energiespeicher oder zumindest eines seiner Widerlager von einer Aushub- in eine Arbeitsposition und umgekehrt verlagern und/oder dort sichern.
Ist die Hilfsvorrichtung direkt mit der Aushubvorrichtung des ziehenden Fahrzeuges in Wirkverbindung, wird beispielsweise durch Aufbringen einer Oberlenkerkraft der Energiespeicher oder sein Widerlager verlagert und seine Wirkung zum Ausheben oder Absenken des Stützrades mit der Aushubbewegung des ziehenden Fahrzeuges gekoppelt. Dies kommt der Arbeitsabfolge insbesondere beim Wenden auf dem Vorgewende des zu bearbeitenden Ackers besonders erleichternd entgegen.
Indem das Zusatzfahrwerk zugleich in Funktion einer Rückverfestigungseinrichtung für den bearbeiteten Boden ausgebildet ist, wird ein weiterer Mehrfachnutzen erzielt. Das Zusatzfahrwerk kann dann in Arbeitsstellung des Gerätes auch zur Tiefenführung desselben verwendet werden. Die auf das Zusatzfahrwerk wirkende Aushubkraft wirkt dann als Niederhaltekraft über den Rahmen auf die vorderen Bodenbearbeitungswerkzeuge, was gerade in schweren Bodenverhältnissen zur Sicherung der Arbeitsqualität des Gerätes dient. Landwirtschaftliche Geräte mit großer Arbeitsbreite werden oft mit einem mehrteiligen, klappbaren Grundrahmen versehen, um einerseits eine gute Bodenanpassung und anderseits eine zulässige Breite für den Straßentransport zu erzielen. In einer solchen Konfiguration ist das Zusatzfahrwerk und seine Komponenten nebst Energiespeicher vorzugsweise an einem mittleren Bereich des Rahmens angeordnet, damit dessen Funktion und Vorteile der Erfindung auch bei seitlich eingeklappten Rahmenteilen erhalten bleiben. Vorzugsweise schwenken die Einrichtungen zur Tiefenführung des Gerätes mit den Seitenteilen des klapp- oder schwenkbaren Rahmens ein.

Die Erfindung zeichnet sich insbesondere dadurch aus, dass durch Ausnutzung der Hubkräfte bzw. Hubbewegung eines ziehenden Fahrzeuges ein Energiespeicher eines landwirtschaftlichen Gerätes in seiner Anlenkung derart verlagert wird, dass im ausgehobenen Zustand des Gerätes ein Teil des Gerätegewichtes über den Energiespeicher auf ein Zusatzfahrwerk übertragen wird und somit das ziehende Fahrzeug entlastet und in Arbeitsstellung eine Entlastung oder ein Aushub des Zusatzfahrwerkes über den gleichen Energiespeicher erfolgt und störende Einflüsse des Zusatzfahrwerkes auf das Arbeitsgerät vermindert oder vermieden werden.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig. 1 die Seitenansicht eines Fahrzeuges mit angebautem Bodenbearbeitungsgerät in ausgehobener Stellung,
Fig. 2 die Seitenansicht eines Fahrzeuges mit Bodenbearbeitungsgerät in Arbeitsstellung,
Fig. 3 eine Detailansicht aus Fig. 2 und
Fig. 4 eine Detailansicht aus Fig. 1.

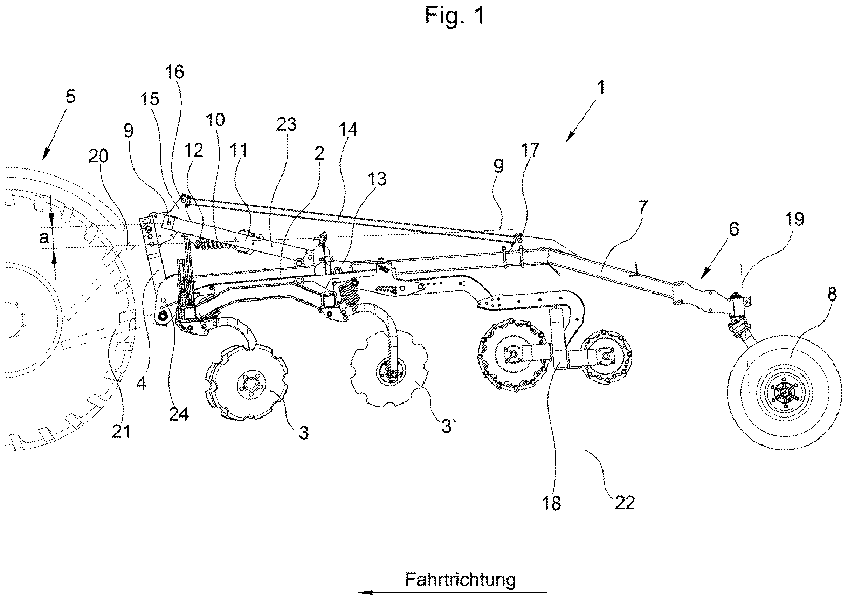

In Figur 1 ist der hintere Teil eines Fahrzeuges 5 schematisch dargestellt, welches ein landwirtschaftliches Arbeitsgerät 1 trägt. Das landwirtschaftliche Arbeitsgerät 1 ist über eine Hubeinrichtung, bestehend aus einem Oberlenker 20 sowie zwei Unterlenkern 21, auch als Dreipunktgestänge bekannt, mit dem ziehenden Fahrzeug 5 verbunden. Der Oberlenker 20 sowie die Unterlenker 21 sind dabei beweglich an den jeweiligen Befestigungspunkten des Anhängeturmes 4 oder des Rahmens 2 gekoppelt. Der sich an den Anhängeturm 4 anschließende Rahmen 2 erstreckt sich nach hinten sowie seitlich zur Gerätemitte und trägt die Arbeitswerkzeuge 3, 3', welche beispielsweise als zwei Reihen von Hohlscheiben nebeneinander und versetzt zueinander am Rahmen angeordnet sind. Verschiedenste Anordnungen von Zinkenreihen oder anderen Werkzeugen, auch in Kombination sind ebenfalls möglich. Hinter den Arbeitswerkzeugen 3, 3' ist eine Tiefenführungseinrichtung 18 in Form einer Tandemwalze am Rahmen 2 höhenverstellbar befestigt und dient der Tiefenführung des Arbeitsgerätes 1 oder auch der Einebnung oder Rückverfestigung des durch die Arbeitswerkzeuge 3, 3' aufgeworfenen Bodenmaterials. Ein Gelenk 13, dessen Gelenkachse sich vorzugsweise quer zur Fahrtrichtung erstreckt, verbindet den Radarm 7 höhenverstellbar mit dem Rahmen 2 des landwirtschaftlichen Arbeitsgerätes 1. Am anderen Ende des Radarmes 7 ist um die Achse 19 schwenkbar ein Rad befestigt und drehbar gelagert und bildet mit dem Radarm 7 zusammen das Zusatzfahrwerk 6, welches einen Teil des Gewichtes des Gerätes 1 auf dem Boden 22 abstützt. Der andere Teil des Gewichtes des Gerätes 1 wird vorne über die Hubeinrichtung, bestehend aus Ober- und Unterlenkern 20, 21, des ziehenden Fahrzeuges 5 getragen. Über ein Gelenk 17 ist eine Strebe 14 beweglich mit dem Radarm 7 verbunden. Das andere Ende der Strebe 14 ist mit einem weiteren Gelenk 16 mit der Umlenkeinrichtung 15 gekoppelt. Die Umlenkeinrichtung 15 ist wiederum über das Gelenk 9 beweglich mit der Strebe 23 und somit zumindest mittelbar mit dem Rahmen 2 verbunden. Die Strebe 23 bildet dabei einen Teil des Rahmens 2 und wird im oberen Bereich durch den Anhängeturm 4 geführt. An der Strebe 23 ist ein Widerlager 11 für den Energiespeicher 10 angeordnet, ebenso ein weiteres Widerlager 12 am unteren Ende der Umlenkeinrichtung 15. Der Energiespeicher 10, hier eine Druckfeder, ist vorkomprimiert und bewirkt in Richtung der Geraden g, welche durch die Mittelpunkte der Widerlager 11 und 12 verläuft, mit dem wirksamen Hebelabstand a ein Drehmoment um das Gelenk 9 auf die Umlenkeinrichtung 15, welches über das Gelenk 16 eine Druckkraft in die Strebe 14 einleitet und den Radarm 7 und somit das Zusatzfahrwerk 6 gegen den Boden 22 drückt. Somit wird das landwirtschaftliche Gerät 1 um den Betrag der Radlast des Zusatzfahrwerkes 6 entlastet und bedarf einer geringeren Hubkraft durch das ziehende Fahrzeug 5. Während der Fahrt über Bodenunebenheiten wird ein Großteil der dabei auftretenden Bewegungen des Zusatzfahrwerkes 6 über den beschriebenen Mechanismus und den Energiespeicher beweglich ausgeglichen. Der vordere Anbauturm ist schwenkbar um einen oder mehrere Drehpunkte 24 mit dem Rahmen verbunden. Eine Langlochkulisse verbindet über einen Querbolzen den oberen Teil des Anhängeturmes mit der oder den Streben 23 und verhindert ein Herunterfallen des Gerätes 1 durch sein Eigengewicht. Dabei greift ein weiterer Querbolzen in einen Nocken oder eine Hakennase der Umlenkeinrichtung 15 ein und verhindert im ausgehobenen Zustand des Gerätes 1 ein Durchschwenken der Umlenkeinrichtung über einen Totpunkt in die obere Lage, welches ein Abheben des Zusatzfahrwerkes vom Boden 22 zur Folge hätte.

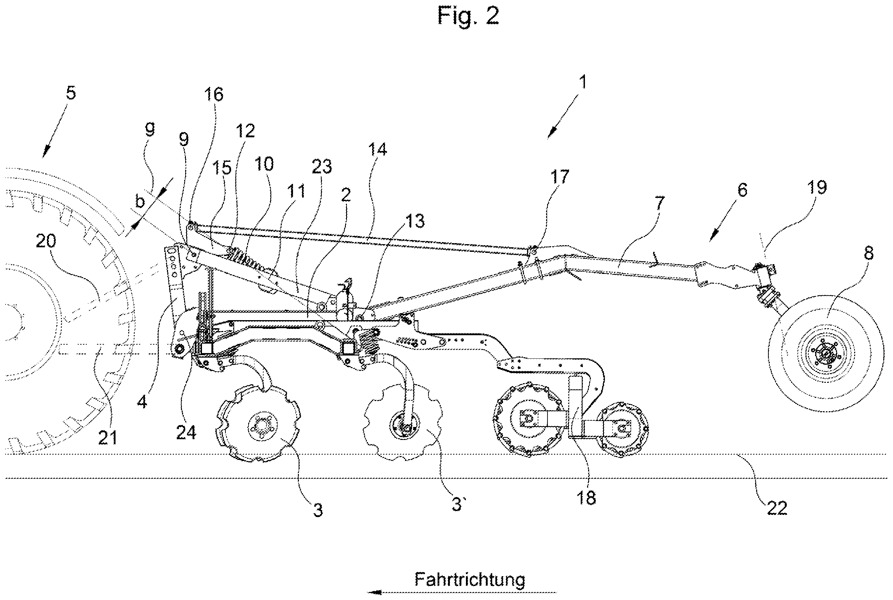

Figur 2 zeigt die gleiche Situation wie Figur 1, jedoch mit abgesenktem Arbeitsgerät 1 in Arbeitsstellung. Dabei schneiden die Arbeitswerkzeuge 3, 3' in den Boden 22 ein und das Gerätegewicht stützt sich über die Tiefenführung 18 auf den Boden ab. Dabei entsteht eine Druckkraft im Oberlenker 20, welche den Anhängeturm in der zuvor beschriebenen Langlochkulisse nach hinten schiebt. Durch diese Bewegung des Anhängeturmes wird der Nocken bzw. die Nase der Umlenkeinrichtung 15 freigegeben. Durch die beim Absenken des Gerätes 1 erzeugte Stützlast auf das Zusatzfahrwerk und somit auf den Radarm 7 und die dadurch erzeugte Druckkraft in der Strebe 14 schwenkt die Umlenkeinrichtung 15 um das Gelenk 9 gegen die Kraft des Energiespeicher 10 über einen Totpunkt nach oben durch. Mit Drehung der Umlenkeinrichtung 15 verlagert sich das Widerlager 12 und somit die durch die Widerlager 11 und 12 verlaufende Gerade g um den Abstand b auf die andere Seite, nämlich oberhalb des Gelenkpunktes 9. Nun erzeugt der wiederum vorgespannte Energiespeicher in Richtung der Gerade g mit dem wirksamen Hebelabstand b ein Drehmoment der Umlenkeinrichtung 15 um das Gelenk 9 in entgegengesetzter Richtung, als in Figur 1 beschrieben. Hierdurch wird eine Zugkraft über das Gelenk 16 auf die Strebe 14 übertragen, welche den Radarm 7 und somit das gesamte Zusatzfahrwerk 6 entgegen seinem Eigengewicht um das Gelenk 13 vom Boden aushebt. Somit hinterlässt das Fahrwerk 6 bzw. das Rad 8 keine oder zumindest keine tiefen Fahrspuren im bearbeiteten Boden 22.

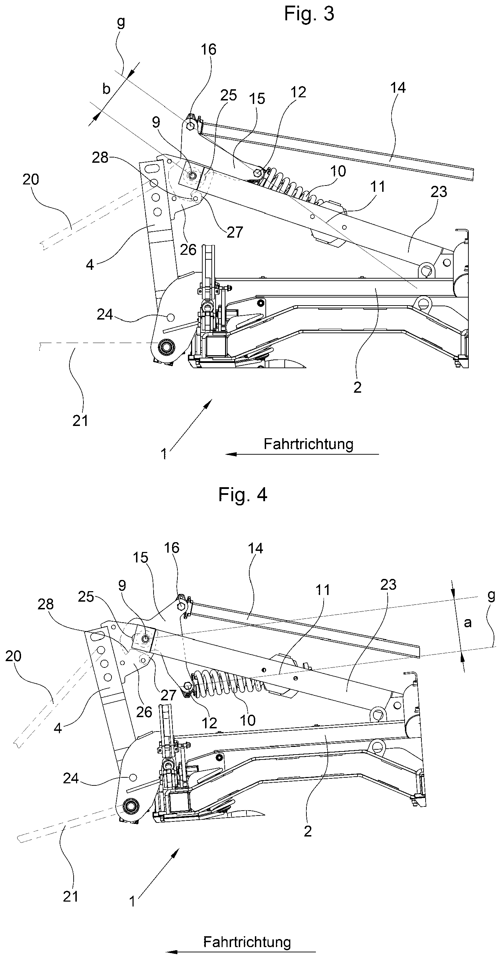

Figur 3 zeigt einen detaillierten Ausschnitt des Arbeitsgerätes 1 aus Fig. 2, wobei einige Komponenten verdeckt und gestrichelt dargestellt sind, um das Verständnis zu erleichtern. Das Arbeitsgerät 1 befindet sich in Arbeitsposition auf dem Boden und wird durch die hintere, nicht dargestellte Tiefenführung abgestützt. Durch die gelenkige Aufhängung des Arbeitsgerätes 1 am Oberlenker 20 und den Unterlenkern 21 wirkt eine Druckkraft durch den Oberlenker 20 auf den Anhängeturm 4, wodurch dieser um den Drehpunkt 24 relativ zum Gelenk 9 der Umlenkeinrichtung 15 bzw. zur Strebe 23 nach hinten schwenkt. Die Laschen 26, welche mit einer Langlochkulisse 25 versehen sind, sind mit dem Anhängeturm 4 verschweißt oder verschraubt und begrenzen die zuvor beschriebene Schwenkbewegung des Anhängeturmes 4, indem der Gelenkbolzen des Gelenkes 9 durch die Langlochkulisse 25 hindurch ragt und zudem die zwischen den Laschen 26 liegende Umlenkeinrichtung 15 drehbar lagert und mit den außerhalb der Laschen 26 liegenden Streben 23 verbindet. Der Gelenkbolzen des Gelenkes 9 befindet sich im vorderen Ende der Langlochkulisse 25 und begrenzt den Schwenkweg des Anhängeturmes 4 bzw. der daran befestigten Laschen 26. Der nicht dargestellte Radarm hat sich auf dem Boden abgestützt und eine Druckkraft über die Strebe 14 und das Gelenk 16 auf die Umlenkeinrichtung 15 ausgeübt. Hierdurch wurde der Energiespeicher 10 komprimiert und durch den Totpunkt hindurch in die dargestellte, obere Lage bewegt, welche durch den Abstand b der Geraden g zum Gelenk 9 dargestellt ist. Wie bereits in Fig. 2 beschrieben, reicht die Kraft des Energiespeichers aus, den Radarm und das Rad und somit das Zusatzfahrwerk gegen sein Eigengewicht mittels Umlenkeinrichtung 15 und Strebe 14 über den Boden auszuheben, und zwar so weit, dass keine oder zumindest keine tiefen Fahrspuren durch das Rad im Boden entstehen. Dabei begrenzt ein Anschlag 27, welcher zwischen den beiden Laschen 26 befestigt ist, die Bewegung der Umlenkeinrichtung 15, in dem ein als Hakennase ausgebildeter Nocken 28 der Umlenkeinrichtung 15 gegen den Anschlag 27 anschlägt. Der Anschlag 27 ist als exzentrischer Sechskantbolzen ausgebildet, um eine ausreichende Bodenfreiheit des Radarms über den Boden einzustellen. Weitere Einstellmöglichkeiten innerhalb des kinematischen Systems sind ebenso denkbar, wie beispielsweise Spindeln, Lochleisten etc.

Figur 4 zeigt die gleiche Anordnung wie Figur 3, jedoch in ausgehobener Position des Arbeitsgerätes 1, entsprechend Figur 1. Durch die Hubkraft bzw. Hubbewegung der Unterlenker 21, welche auf den vorderen Bereich des Arbeitsgerätes 1 einwirken, fällt dieses durch sein Eigengewicht ab und erzeugt eine Zugkraft im Oberlenker 20. Hierdurch schwenkt der Anhängeturm 4 mit seinen Laschen 26 und dem Anschlag 27 um den Drehpunkt 24 nach vorn. Dabei drückt der Anschlag gegen den Nocken 28 der Umlenkeinrichtung 15 und bewegt diese um das Gelenk 9. Hierdurch verschiebt sich der Gelenkpunkt 12 so weit nach unten, bis der daran befestigte Energiespeicher 10 seinen Totpunkt durchschreitet und mit den nun entstehenden Hebelarm mit Abstand a zwischen Gelenk 9 und der Geraden g ein Drehmoment um die Achse des Gelenkes 9 und somit über das Gelenk 16 eine Druckkraft in Richtung Strebe 14 erzeugt, welche auf den nicht dargestellten Radarm wirkt. Da die Langlochkulissen 25 der Laschen 26 in den Bolzen des Gelenkes anschlagen, wird das Arbeitsgerät 1 über Oberlenker 20 und Unterlenker 21, wie auch in Figur 1 dargestellt, ausgehoben. Jedoch wird ein Teil des Gerätegewichtes über den Radarm und das Rad auf den Boden abgestützt und somit die Hubeinrichtung des ziehenden Fahrzeuges während der Aushubbewegung oder zumindest in seiner oberen Stellung teilweise entlastet.

**BEZUGSZEICHENLISTE**

| | |
|---|---|
| 1 | Landwirtschaftliches Arbeitsgerät |
| 2 | Rahmen |
| 3 | Arbeitswerkzeug |
| 4 | Anhängeturm |
| 5 | Fahrzeug |
| 6 | Zusatzfahrwerk |
| 7 | Radarm |
| 8 | Rad |
| 9 | Gelenk |
| 10 | Energiespeicher |
| 11 | Widerlager |
| 12 | Widerlager |
| 13 | Gelenk |
| 14 | Strebe |
| 15 | Umlenkeinrichtung |
| 16 | Gelenk |
| 17 | Gelenk |
| 18 | Tiefenführung |
| 19 | Achse |
| 20 | Oberlenker |
| 21 | Unterlenker |
| 22 | Boden |
| 23 | Strebe |
| 24 | Drehpunkt |
| 25 | Kulisse |
| 26 | Lasche |
| 27 | Anschlag |
| 28 | Nocken |

## Patentansprüche

1. Landwirtschaftliches Arbeitsgerät (1), insbesondere ein Bodenbearbeitungsgerät, mit einem Rahmen (2) zur Aufnahme von Arbeitswerkzeugen (3) sowie einem Anhängeturm (4) an einer Seite des Arbeitsgerätes (1) zur Anhängung des Arbeitsgerätes an ein Fahrzeug (5) und einem an der anderen Seite des Arbeitsgerätes (1) angeordneten Zusatzfahrwerk (6) mit zumindest einem Radarm (7) und einem daran drehbar befestigtem Rad (8), wobei der Radarm (7) vertikal beweglich zum Arbeitsgerät (1) über zumindest ein Gelenk (9, 13) mit dem Rahmen (2) verbunden ist, wobei zumindest ein Energiespeicher (10) beweglich zwischen dem Rahmen (2) und dem Radarm (7) mit jeweils einem Widerlager (11, 12) angeordnet ist, wobei die Widerlager (11, 12) auf einer Geraden (g) angeordnet sind,
**dadurch gekennzeichnet,**
**dass** das Gelenk (9, 13) in einer abgesenkten Position des Radarms (2) auf einer ersten Seite (a) beabstandet zur Geraden (g) und in einer ausgehobenen Position des Radarms (2) auf einer zweiten, der ersten Seite gegenüberliegenden Seite (b) beabstandet zur Geraden (g) angeordnet ist.

2. Landwirtschaftliches Arbeitsgerät nach Anspruch 1,
**dadurch gekennzeichnet,**
**dass** die resultierende Wirklinie einer oder mehrerer Energiespeicher annähernd auf der Geraden (g) liegt, welche durch die Widerlager (11,12) verläuft.

3. Landwirtschaftliches Arbeitsgerät nach Anspruch 1 oder 2,
**dadurch gekennzeichnet,**
**dass** der Radarm über ein erstes Gelenk (13) beweglich mit dem Rahmen verbunden ist und über ein zweites Gelenk (9) und eine Umlenkeinrichtung (15) mit dem Energiespeicher (10) verbunden ist.

4. Landwirtschaftliches Arbeitsgerät nach vorstehenden Ansprüchen,
**dadurch gekennzeichnet,**
**dass** die Vorspannung des Energiespeichers einstellbar ausgebildet ist.

5. Landwirtschaftliches Arbeitsgerät nach vorstehenden Ansprüchen,
**dadurch gekennzeichnet,**
**dass** der Energiespeicher als ein- oder mehrteiliges Federpaket ausgebildet ist.

6. Landwirtschaftliches Arbeitsgerät nach vorstehenden Ansprüchen,
**dadurch gekennzeichnet,**
**dass** der Energiespeicher als Fluidspeicher mit daran angeschlossenem Druckspeicher ausgebildet ist.

7. Landwirtschaftliches Arbeitsgerät nach vorstehenden Ansprüchen,
**dadurch gekennzeichnet,**
**dass** eine weitere Hilfsvorrichtung (27, 28) vorgesehen ist, welche durch eine externe Kraft die Verlagerung zumindest eines Widerlagers (11, 12) von einer ersten in eine zweite Position bewirkend oder unterstützend ausgebildet ist.

8. Landwirtschaftliches Arbeitsgerät nach vorstehenden Ansprüchen,
**dadurch gekennzeichnet,**
**dass** die Hilfseinrichtung (27, 28) zur Verlagerung der Position von zumindest einem Widerlager (11, 12) mit der Aushubvorrichtung des ziehenden Fahrzeuges zusammenwirkend ausgebildet ist.

9. Landwirtschaftliches Arbeitsgerät nach vorstehenden Ansprüchen,
**dadurch gekennzeichnet,**
**dass** das Zusatzfahrwerk (6) zugleich in Funktion einer Rückverfestigungseinrichtung für den bearbeiteten Boden ausgebildet ist.

10. Landwirtschaftliches Arbeitsgerät nach vorstehenden Ansprüchen,
**dadurch gekennzeichnet,**
**dass** der Rahmen (2) des landwirtschaftlichen Gerätes als mehrteiliger klapp- oder schwenkbarer Rahmen ausgebildet ist.

## Claims

1. The invention relates to an agricultural implement (1), in particular a ground working implement, comprising a frame (2) for receiving working tools (3) and an attachment tower (4) on one side of the working implement (1) for attaching the working implement to a vehicle (5), and an auxiliary chassis (6) arranged on the other side of the implement (1) with at least one wheel arm (7) and a wheel (8) rotatably fastened thereto, wherein the wheel arm (7) is movable vertically with respect to the working implement (1) via at least one linkage (9, 13), wherein at least one energy accumulator (10) is arranged movably between the frame (2) and the wheel arm (7) with a respective counter bearing (11, 12), wherein the counter bearings (11, 12) are arranged on a straight line (g)
**characterized in that**
the linkage (9,13) is arranged in a lowered position of the wheel arm (2) on a first side (a) at a distance along the straight line (g) and in a raised position of the wheel arm (2) is arranged at a distance (b) along the straight line (g).

2. Agricultural implement according to claim 1, **characterized in that**
the resulting effective line of one or more energy accumulators is approximately on the straight line (g) which runs through the counter bearings (11, 12).

3. Agricultural implement according to preceding claims, **characterized in**
**that**
the wheel arm is movably connected to the frame via a first linkage (13) and is connected to the energy accumulator (10) via a second linkage (9) and a deflection device (15).

4. Agricultural implement according to preceding claims, **characterized in**
**that**
the pre-loading of the energy accumulator is adjustable.

5. Agricultural implement according to preceding claims, **characterized in**
**that**
the energy accumulator is designed as a one-part or multi-part spring assembly.

6. Agricultural implement according to preceding claims, **characterized in**
**that**
the energy accumulator is designed as a fluid reservoir with a pressure accumulator connected thereto.

7. Agricultural implement according to preceding claims, **characterized in**
**that**
a further auxiliary device (27, 28) is provided, which is designed or supported by an external force to move the at least one counter bearing (11, 12) from a first position into a second position.

8. Agricultural implement according to preceding claims, **characterized in**
**that**
the auxiliary device (27, 28) is designed to cooperate with the lifting device of the towing vehicle to displace the position of at least one counter bearing (11, 12).

9. Agricultural implement according to preceding claims, **characterized in**
**that**
the auxiliary chassis (6) is also designed as a function of a rear device for reconsolidation of the ground being worked.

10. Agricultural implement according to preceding claims, **characterized in**
**that**
the frame (2) of the agricultural implement is designed as a multi-part folding or pivoting frame.

## Revendications

1. Machine agricole (1), en particulier machine de travail du sol, comprenant un châssis (2) pour recevoir des outils de travail (3) et une tête d'attelage (4) sur un côté de la machine (1) pour fixer la machine à un véhicule (5), et comprenant un châssis auxiliaire (6) disposé de l'autre côté de la machine (1) et comportant au moins un bras (7) et une roue (8) qui est fixée de manière à pouvoir tourner sur celui-ci, dans laquelle le bras de roue (7) est relié au châssis (2) de manière mobile verticalement par rapport à l'outil (1) par au moins une articulation (9, 13), au moins un accumulateur d'énergie (10) étant disposé de manière mobile entre le châssis (2) et le bras de roue (7) avec une butée correspondante (11, 12), les butées (11, 12) étant disposées sur une ligne droite (g),
**caractérisée en ce que**
dans une position abaissée du bras de roue (2), l'articulation (9, 13) est disposée sur un premier côté (a) espacé de la ligne droite (g) et, dans une position relevée du bras de roue (2), sur un second côté (b) opposé au premier côté, espacé de la ligne droite (g).

2. Machine agricole selon la revendication 1,
**caractérisée en ce que**
la ligne active résultante d'un ou plusieurs accumulateurs d'énergie repose approximativement sur la ligne droite (g) qui traverse les culées (11, 12).

3. Machine agricole selon la revendication 1 ou 2,
**caractérisée en ce que**
le bras de roue est relié de manière mobile au châssis par une première articulation (13) et est relié au réservoir d'énergie (10) par une deuxième articulation (9) et un dispositif de redirection (15).

4. Machine agricole selon les revendications ci-dessus,
**caractérisée en ce que**
la précharge de l'accumulateur d'énergie est réglable.

5. Machine agricole selon les revendications ci-dessus,
**caractérisée en ce que**
l'accumulateur d'énergie est conçu sous la forme d'un ensemble de ressorts en une ou plusieurs pièces.

6. Machine agricole selon les revendications ci-dessus,
**caractérisée en ce que**
l'accumulateur d'énergie est conçu comme un accumulateur de fluide avec un accumulateur de pression raccordé à celui-ci.

7. Machine agricole selon les revendications ci-dessus,
**caractérisée en ce**
**qu'**il est prévu un autre dispositif auxiliaire (27, 28) qui, au moyen d'une force extérieure, est conçu pour provoquer ou supporter le déplacement d'au moins une partie secondaire (11, 12) d'une première à une seconde position.

8. Machine agricole selon les revendications ci-dessus,
**caractérisée en ce que**
le dispositif auxiliaire (27, 28) pour déplacer la position d'au moins une butée (11, 12) est conçu pour coopérer avec le dispositif relevage du véhicule tracteur.

9. Machine agricole selon les revendications ci-dessus,
**caractérisée en ce que**
le train de roulement auxiliaire (6) est formé en même temps qu'un dispositif de rappuyage du sol travaillé.

10. Machine agricole selon les revendications ci-dessus,
**caractérisée en ce que**
le châssis (2) de la machine agricole est réalisé sous la forme d'un châssis repliable ou pivotant en plusieurs parties.
